# EUROPÄISCHE PATENTSCHRIFT

(11) **EP 2 032 230 B1**
(45) Veröffentlichungstag und Bekanntmachung des Hinweises auf die Patenterteilung: **02.04.2014**
(21) Anmeldenummer: 07765375.6
(22) Anmeldetag: 12.06.2007
(51) Int. Cl.: G01N 30/28, B01D 15/08

(54) **VERFAHREN ZUR OPTIMIERUNG CHROMATOGRAPHISCHER REINIGUNGSVERFAHREN FÜR BIOMOLEKÜLE**
PROCESS FOR OPTIMIZING CHROMATOGRAPHIC PURIFICATION PROCESSES FOR BIOMOLECULES
PROCÉDÉ D'OPTIMISATION DE PROCÉDÉS DE PURIFICATION CHROMATOGRAPHIQUE DE BIOMOLÉCULES

(30) Priorität: 14.06.2006 DE 102006027496
(43) Veröffentlichungstag der Anmeldung: 11.03.2009
(73) Patentinhaber: Boehringer Ingelheim Pharma GmbH & Co. KG, 55216 Ingelheim am Rhein (DE)
(72) Erfinder: ECKERMANN, Christian, 88400 Biberach (DE); EBERT, Sybille, 88400 Biberach (DE); RUBENWOLF, Stefanie, 79292 Pfaffenweiler (DE); AMBROSIUS, Dorothee, 88471 Laupheim (DE)
(74) Vertreter: Mahlbacher, Volker
(86) Internationale Anmeldenummer: PCT/EP2007/055776
(87) Internationale Veröffentlichungsnummer: WO 2007/144353

(56) Entgegenhaltungen:
- WO-A-2004/028658
- DE-A1- 19 860 354
- US-A1- 2005 176 937

## Beschreibung

Die Erfindung betrifft ein Verfahren, das die Entwicklung und Optimierung von in großem Maßstab durchführbaren chromatographischen Aufreinigungsverfahren für Biomoleküle ermöglicht.

### Hintergrund der Erfindung

Biomoleküle wie Proteine, Polynukleotide, Polysaccharide und dergleichen gewinnen als Medikamente, als Diagnostika, als Zusatzstoffe in Nahrungsmitteln, Waschmitteln und dergleichen, als Forschungsreagenzien und für viele weitere Anwendungen zunehmend an kommerzieller Bedeutung. Der Bedarf an solchen Biomolekülen lässt sich - z.B. im Falle von Proteinen - in aller Regel nicht mehr durch Isolierung der Moleküle aus natürlichen Quellen befriedigen sondern erfordert den Einsatz biotechnologischer Produktionsmethoden.

Die biotechnologische Herstellung von Proteinen beginnt typischerweise mit der Isolierung der DNA, die für das gewünschte Protein codiert, und deren Klonieren in einen geeigneten Expressionsvektor. Nach Transfektion des Expressionsvektors in geeignete prokaryontische oder eukaryontische Expressionszellen und anschließender Selektion transfizierter Zellen werden letztere in Fermentern kultiviert und das gewünschte Protein zur Expression gebracht. Anschließend erfolgt die Ernte der Zellen bzw. des Kulturüberstandes und die Aufarbeitung und Reinigung des darin enthaltenen Proteins.

Im Falle eukaryontischer Expressionssysteme, also bei Verwendung von Säugetierzellkulturen wie etwas CHO oder NS0-Zellen, konnte in den zurückliegenden 15 Jahren eine Steigerung der beim Expressionsschritt erreichbaren Konzentration des gewünschten Proteins in den Zellkulturen bzw. Zellkulturüberständen um den Faktor 100 erzielt werden. Im gleichen Zeitraum stieg die Bindekapazität von Chromatographiematerialien, die bei der anschließenden Aufreinigung der Proteine eingesetzt werden, gerade einmal um den Faktor 3. Aus diesem Grund besteht ein dringender Bedarf an verbesserten, optimierten Aufreinigungsverfahren für Biomoleküle, insbesondere Proteine, die in großem, industriellen Maßstab durchgeführt werden können.

Im Falle von Biopharmazeutika, wie etwa als Medikamente eingesetzten Proteinen, z.B. therapeutischen Antikörpern, ist neben der Produktausbeute auch die Abtrennung von Verunreinigungen von überragender Bedeutung. Hierbei können prozess- und produktabhängige Verunreinigungen unterschieden werden. Die prozessabhängigen Verunreinigungen beinhalten Komponenten der Wirtszellen wie Proteine und Nukleinsäuren und stammen aus der Zellkultur (wie Medienbestandteile) oder aus der Aufarbeitung (wie etwa Salze oder abgelöste Chromatographie-Liganden). Produktabhängige Verunreinigungen sind molekulare Varianten des Produkts mit abweichenden Eigenschaften. Hierzu zählen verkürzte Formen wie Vorläufer und hydrolytische Abbauprodukte, aber auch modifizierte Formen, entstanden beispielsweise durch Desaminierungen, falsche Glykosylierungen oder falsch verknüpfte Disulfidbrücken. Ebenso zu den produktabhängigen Varianten zählen Polymere und Aggregate. Als Kontaminanten werden alle weiteren Materialien chemischer, biochemischer oder mikrobiologischer Natur bezeichnet, die nicht direkt zum Herstellungsprozess gehören. Kontaminanten sind z.B. Viren, die unerwünschterweise in Zellkulturen auftreten können.

Verunreinigungen und Kontaminanten führen im Falle von Biopharmazeutika zu Sicherheitsbedenken. Diese werden verstärkt, wenn - wie sehr häufig bei Biopharmazeutika - die Verabreichung der therapeutischen Proteine über Injektion oder Infusion direkt in die Blutbahn erfolgt. So können Wirtszellkomponenten zu allergischen Reaktionen oder immunopathologischen Effekten führen. Daneben können Verunreinigungen auch zu einer unerwünschten Immunogenität des verabreichten Proteins führen, also eine unerwünschte Immunreaktion des Patienten auf das Therapeutikum auslösen, bis hin zu einem lebensbedrohenden anaphylaktischen Schock. Daher besteht ein Bedarf an geeigneten Reinigungsprozessen, mit denen alle unerwünschten Substanzen auf ein unbedenkliches Maß abgereichert werden können.

Andererseits können auch im Falle von Biopharmazeutika wirtschaftliche Aspekte nicht ignoriert werden. So sollen die eingesetzten Produktions- und Reinigungsverfahren die Rentabilität des damit erzeugten biopharmazeutischen Produkts nicht gefährden. Zudem spielt auch die Zeit, innerhalb der ein neuer Aufreinigungsprozess etabliert werden kann, eine erhebliche Rolle: Neben dem Einfluss auf die Kosten muss die Prozessentwicklung mit der vorklinischen und klinischen Entwicklung des Medikaments abgestimmt sein. So können z.B. bestimmte präklinische und sämtliche klinischen Studien erst beginnen, wenn hinreichende Mengen des Biopharmazeutikums in hinreichender Reinheit zur Verfügung stehen.

Als Ausgangspunkt für die Entwicklung eines auch in großem Maßstab durchführbaren Aufreinigungsprozesses für einen Antikörper kann z.B. folgender Standardprozess, bestehend aus vier Grundschritten, dienen: Im ersten Schritt wird das Zielprotein isoliert, aufkonzentriert und stabilisiert ("capturing"). Im zweiten Schritt werden Viren entfernt, im dritten erfolgt eine Reinigung, bei der die meisten Verunreinigungen wie Nukleinsäuren, andere Proteine und Endotoxine abgereichert werden. Im letzten Schritt werden die ggf. noch verbliebenen Spuren von Verunreinigungen und Kontaminanten beseitigt ("polishing").

Neben Filtrations- und Fällungsschritten kommt dabei (säulen-)chromatographischen Verfahren eine ganz zentrale Bedeutung zu. So beinhaltet etwa das "capturing" häufig einen affinitätschromatographischen Reinigungsschritt. Dementsprechend sind heutzutage zahlreiche säulenchromatographische Verfahren und hierbei verwendbare Chromatographiematerialen bekannt. Mit steigender Zahl an Alternativen müssen allerdings auch immer zahlreichere Vorversuche durchgeführt werden, um die im Hinblick auf Reinigungseffekt, Ausbeute, biologische Aktivität, Zeit, Kosten, etc. optimalen Materialien und Verfahren zu ermitteln.

Bei der Etablierung und Optimierung eines Aufreinigungsprozesses ist außerdem zu beachten, dass dieser sehr individuell auf die biochemischen und biophysikalischen Eigenschaften des jeweils zu reinigenden Moleküls (Zielmolekül, Zielprotein) sowie auf die Bedingungen, unter denen das biologische Ausgangsmaterial gewonnen wurde, zugeschnitten sein muss. Das biologische Ausgangsmaterial, aus welchem das Zielmolekül isoliert werden soll, besteht in der Regel aus einem sehr komplexen Stoffgemisch. Zur Isolierung und Aufkonzentrierung des Zielmoleküls macht man sich dessen jeweilige spezifische Eigenschaften wie etwa Form, Größe, Löslichkeit, Oberflächenladung, Oberflächenhydrophobizität sowie dessen biospezifische Affinität zu Bindungspartnern zu nutze. Für jedes neue Zielmolekül, ja sogar selbst bei gleichem Zielmolekül aber Variation eines der vorausgehenden Arbeitsschritte (z.B. einer Änderung der Zusammensetzung des Kultivierungsmediums für die Fermentation) muss der Prozess neu optimiert werden, da unter den neuen Bedingungen möglicherweise nicht mehr die in oben genannter Hinsicht bestmöglichen Ergebnisse erzielt werden können.

Gleichzeitig potenziert sich durch die Anzahl der oben genannten Parameter die Zahl an theoretisch denkbaren Prozessalternativen. Bei der Säulenchromatographie muss z.B. die Anordnung des Chromatographieschritts im Gesamtprozess, das Säulenmaterial, der pH-Wert, der Salzgehalt und die Art der verschiedenen Laufpuffer, die Proteinkonzentration bei Beladung der Säule und vieles mehr optimiert werden. Dies macht es praktisch unmöglich, im großtechnischen Maßstab mit vertretbarem Kosten- und Zeitaufwand einen optimierten säulenchromatographischen Prozess zu entwickeln. Andererseits erfordern die Rentabilität, aber auch anlagentechnische Beschränkungen (wie etwa die Notwendigkeit, möglichst wenige unterschiedliche Puffer und möglichst geringe Mengen bzw. Volumina an Puffer und Chromatographiematerialien einzusetzen, die Volumina der produkthaltigen Fraktionen klein zu halten sowie die Notwendigkeit, Prozesszeiten und auch z.B. Abwasservolumina gering zu halten) gerade eine solche Optimierung hinsichtlich eines jeden einzelnen Prozessschritts. Herkömmlicherweise wird dieses Problem dadurch angegangen, dass in mehr oder weniger systematisch durchgeführten Vorversuchen nach dem "Versuch- und-Irrtum"-Prinzip eine begrenzte Zahl an Prozessparametern sukzessive variiert wird und diese Versuche beendet werden, sobald ein grundsätzlich "funktionierender" Prozess ermittelt werden konnte. Eine systematische Optimierung aller wesentlichen Parameter eines Prozesses, ggf. unter mehreren Gesichtspunkten, z.B. im Hinblick auf Abreicherung von Verunreinigungen, hohe Produktausbeuten bei gleichzeitig geringem Verlust an biologischer Aktivität und dergleichen, findet damit praktisch nicht oder nur in sehr eingeschränktem Maße statt. In solcher Weise etablierte Prozesse werden folglich in aller Regel suboptimal sein.

Alternativ wurde versucht, die obigen Optimierungen anhand kleiner Säulchen im Labormaßstab durchzuführen (z.B. Säulchen mit etwa 1 mL Chromatographiematerial). Hierbei zeigte sich jedoch, dass mit vertretbarem Aufwand wiederum nur eine begrenzte Zahl an Parametern variiert werden konnte, da die Beladung-, Wasch- und Elutionsschritte auch in diesen kleineren Dimensionen viel Zeit in Anspruch nehmen.

Ein weiterer Ansatz zur Prozessoptimierung in miniaturisiertem Maßstab kann der W02004/028658 entnommen werden. In einem "batch-Verfahren" wird hierbei in parallelen Ansätzen auf Multi-Well-Platten die Bindung einer biologischen Probe an Chromatographiematerialien getestet. Zwar können mit diesem Verfahren schnell und kostengünstig optimierte Bedingungen für diesen Bindungsschritt ermittelt werden. Damit ist jedoch noch keine Aussage darüber möglich, ob unter den so ermittelten Bedingungen auch bei den unter großtechnischen Bedingungen zwingend anzuwendenen säulenchromatographischen Verfahren noch optimale Ergebnisse erzielbar sind. Auch betrifft diese Prozessoptimierung allein die Optimierung des Schritts der Beladung des Chromatographiematerials, also nur einen kleinen Ausschnitt aus dem Gesamtprozess.

Es besteht daher weiterhin ein dringender Bedarf an Verfahren, mit denen schnell und kostengünstig säulenchromatographische Reinigungsprozesse für Biomoteküle etabliert und optimiert werden können, wobei diese Prozesse auch unter den Bedingungen einer großtechnischen Produktion und Reinigung des Biomoleküls zufrieden stellende Ergebnisse liefern müssen. Es ist Aufgabe der Erfindung, ein solches Verfahren bereitzustellen.

### Zusammenfassung der Erfindung

Die vorstehend dargelegte Aufgabe wird durch die in den Patentansprüchen genannten Verfahren gelöst.

Insbesondere wird erfindungsgemäß ein Verfahren zum Auffinden geeigneter Parameter für chromatographische Verfahren zur Trennung bzw. Reinigung biologischer Moleküle bereitgestellt, wobei in kleinem Maßstab, etwa mit Chromatographiematerial-Gelbettvolumen von zwischen 0,01 und 2 mL, eine Schrittfolge aus Equilibrierungs-, Beladungs-, Wasch- und Elutionsschritten im teilweisen Satzverfahren (Schritte mit und ohne Suspendieren des Chromatographiematerials) vollzogen wird. Auf diese Weise können in einer Mehrzahl von Versuchen einzelne oder mehrere Parameter variiert werden und kann aus den Ergebnissen dieser Versuche auf optimale Bedingungen rückgeschlossen werden, unter denen das chromatographische Verfahren durchgeführt werden kann. Die so bestimmten optimierten Bedingungen sind dann auch auf Chromatographieverfahren, insbesondere Säulenchromatographieverfahren anwendbar, die in größerem Maßstab durchgeführt werden.

Mit dem Begriff "teilweises Satzverfahren" ist dabei gemeint, dass bei einem oder mehreren der genannten Schritte - aber nicht bei allen Schritten - das Chromatographiematerial suspendiert (aufgeschlämmt) wird, also in einem batch-Verfahren gearbeitet wird. Die Schritte, bei denen keine Suspendierung (Aufschlämmung) des Chromatographiematerials erfolgt, werden nach Art einer "klassischen" Säulenchromatographie durchgeführt, indem auf ein gesetztes Gelbett die jeweilige Pufferlösung, z.B. ein Elutionspuffer, aufgetragen wird, ohne das Gelbett aufzuschlämmen, und der Puffer z.B. durch Schwerkraft, Zentrifugation, Anlegen eines Druckgradienten oder dergleichen gerichtet durch das Säulenmaterial laufen gelassen wird.

Gemäß der Erfindung hat es sich zur Lösung der o.g. Aufgabe als besonders zweckmäßig erwiesen, das "teilweise Satzverfahren" so auszuführen, dass beim Beladungsschritt das Chromatographiematerial suspendiert wird, hingegen beim Elutionsschritt (bzw. im Falle mehrerer Elutionsschritte bei den Elutionsschritten) ein Suspendieren des Chromatographiematerials vermieden wird und stattdessen die Elutionslösung gerichtet durch das gesetzte Gelbett bewegt wird.

Wenn nun selbst in kleinem Maßstab, z.B. unter Verwendung von zwischen ca. 50 µl und 2 ml Chromatographiematerial, gemäß dem zuvor beschriebenen teilweisen Satzverfahren optimale Beladungs-, Wasch- und/oder Elutionsbedingungen für das jeweilige Chromatographiematerial und das jeweils zu reinigende Biomolekül ermittelt werden (indem z.B. die Parameter pH-Wert und/oder lonenstärke der einzelnen Lösungen, Proteinkonzentration und dergleichen variiert werden und ein optimales Ergebnis hinsichtlich Aufreinigungseffekt, Ausbeute und biologischer Aktivität des Biomoleküls bestimmt wird), so lassen sich diese Bedingungen überraschenderweise sehr reproduzierbar auf Säulenchromatographieverfahren auch in größerem Maßstab übertragen, auch wenn letztere nicht im teilweisen Satzverfahren sondern in herkömmlicher Weise als reine säulenchromatographische Verfahren durchgeführt werden, also in einer auf industriellen Maßstab aufskalierbaren Weise. Mit anderen Worten kann also das im Miniaturmaßstab durchgeführte teilweise Satzverfahren als "Modell" für Säulenchromatographieverfahren eingesetzt werden. Die Miniaturisierung erlaubt eine im Vergleich zu herkömmlichen Optimierungsverfahren erheblich kostengünstigere und schnellere Arbeitsweise. Daneben können gemäß einer bevorzugten Ausführungsform die miniaturisierten Ansätze durch Verwendung geeigneter Probengefäße (wie etwa Multi-Well-Filterplatten) und Vorrichtungen (Mehrkanal-Pipetten, Pipettierroboter) in größerer Zahl parallel durchgeführt werden und dabei mehrere Parameter gleichzeitig variiert werden. Im Ergebnis erhält man dadurch eine große Anzahl an Daten, aus denen sich die im Hinblick auf alle entscheidenden Parameter gleichzeitig optimierten Säulenchromatographiebedingungen für ein konkretes zu reinigendes Biomolekül ermitteln lassen. Ein solches Optimierungsverfahren ist also kostengünstig und schnell durchführbar und ermöglicht entscheidende Fortschritte in Bezug auf die optimale Auswahl geeigneter Parameter für chromatographische Trennverfahren. Damit leistet dieses Verfahren einen entscheidenden Beitrag zur Verbesserung von Aufreinigungsverfahren für Biomoleküle und damit auch zur Qualität und Rentabilität der Produkte, in die ein solches Biomolekül Eingang findet.

### Kurze Beschreibung der Abbildungen

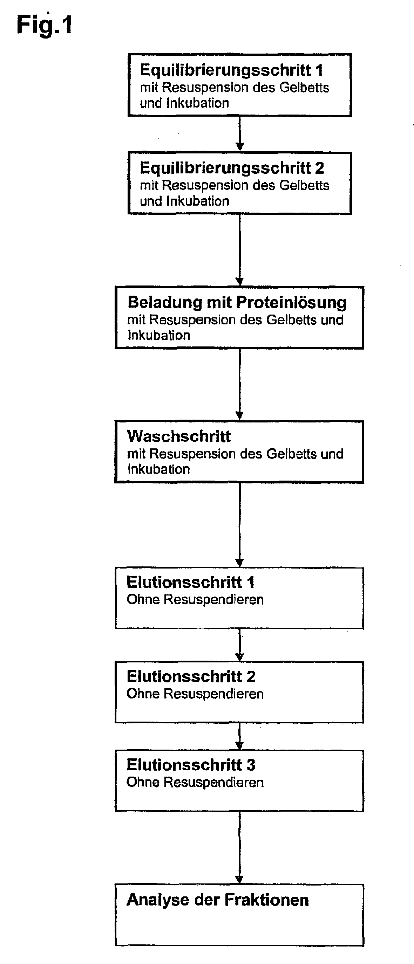

- **Fig. 1**: zeigt ein Flussdiagramm, in dem ein teilweises Satzverfahren gemäß einer besonders bevorzugten Ausführungsform der Erfindung dargestellt ist.

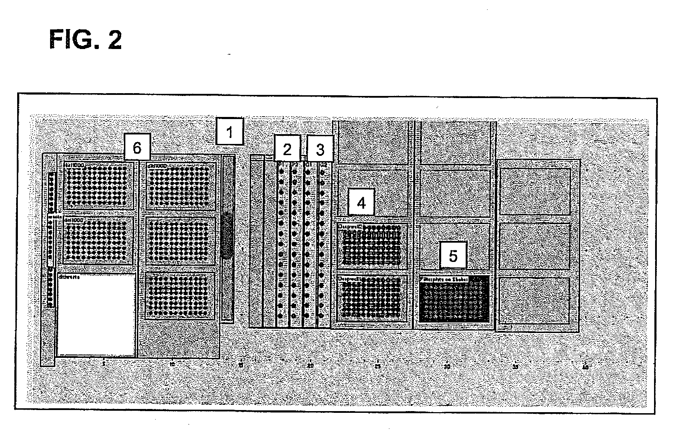

- **Fig. 2**: zeigt schematisch einen Versuchsaufbau am Roboter. Gezeigt sind: Trog mit Ethanollösung (1), Probengefäße mit Proteinlösungen (2), Probengefäße mit Suspensionen der Chromatographiematerialien (3), Mikrotiterplatten mit Equilibrierungs-, Wasch- und Elutionspuffern (4), Mikrotiterfilterplatte (5) und Pipettenspitzenvorrat (6).

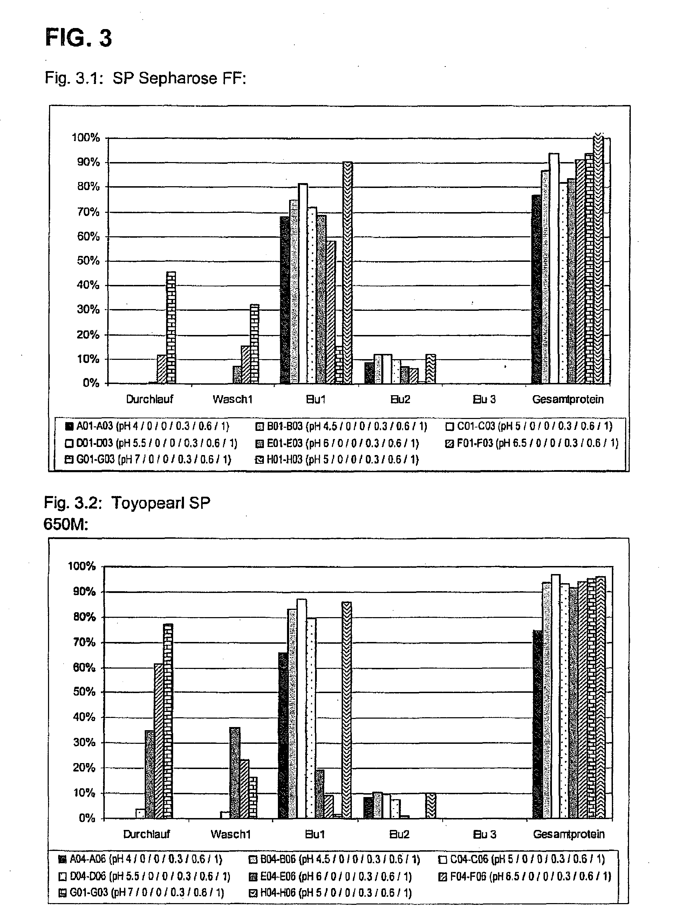

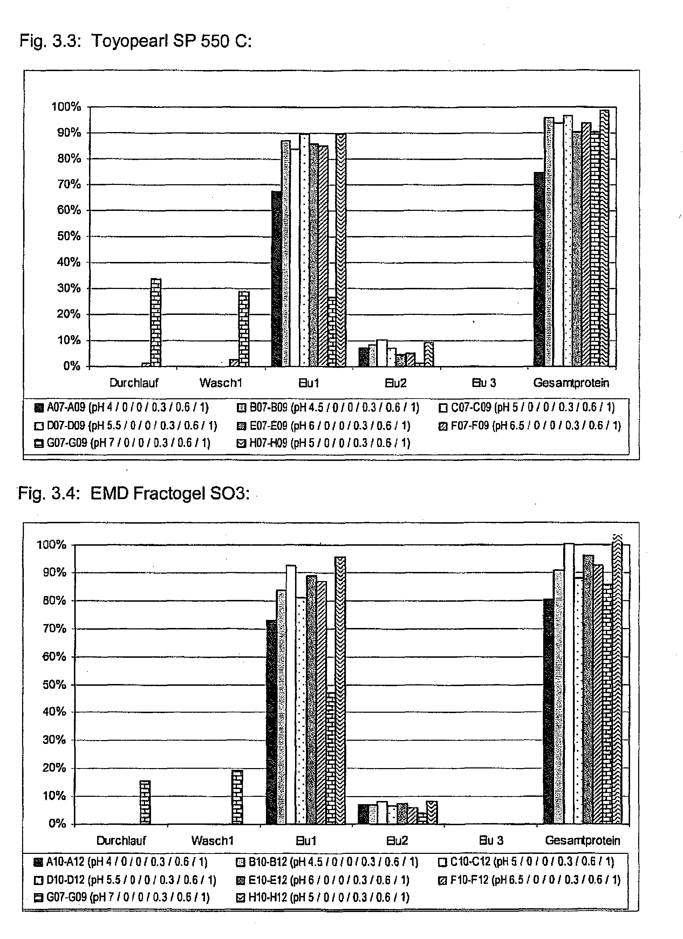

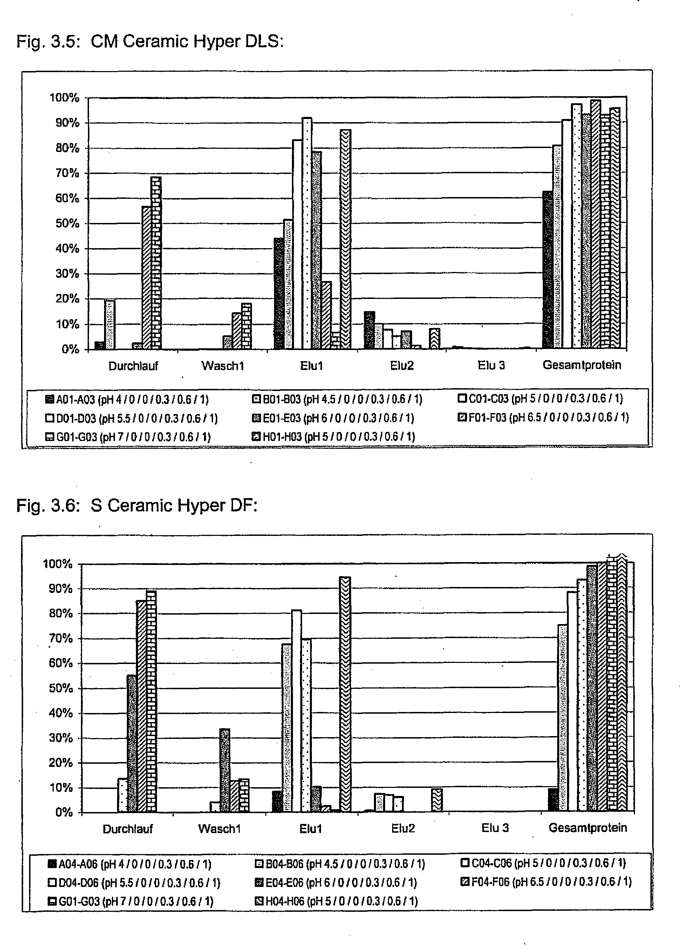

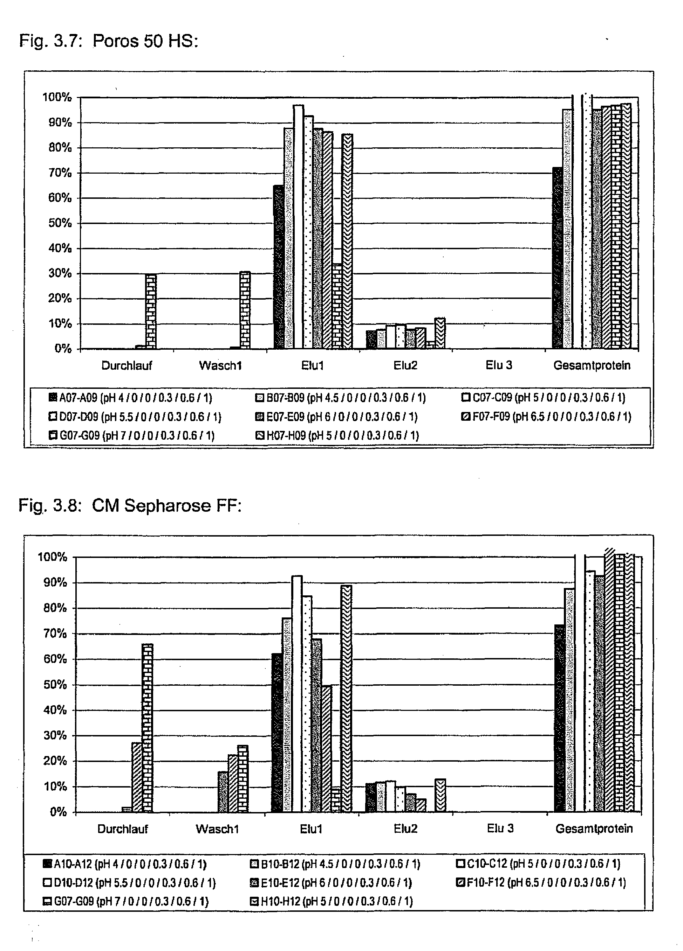

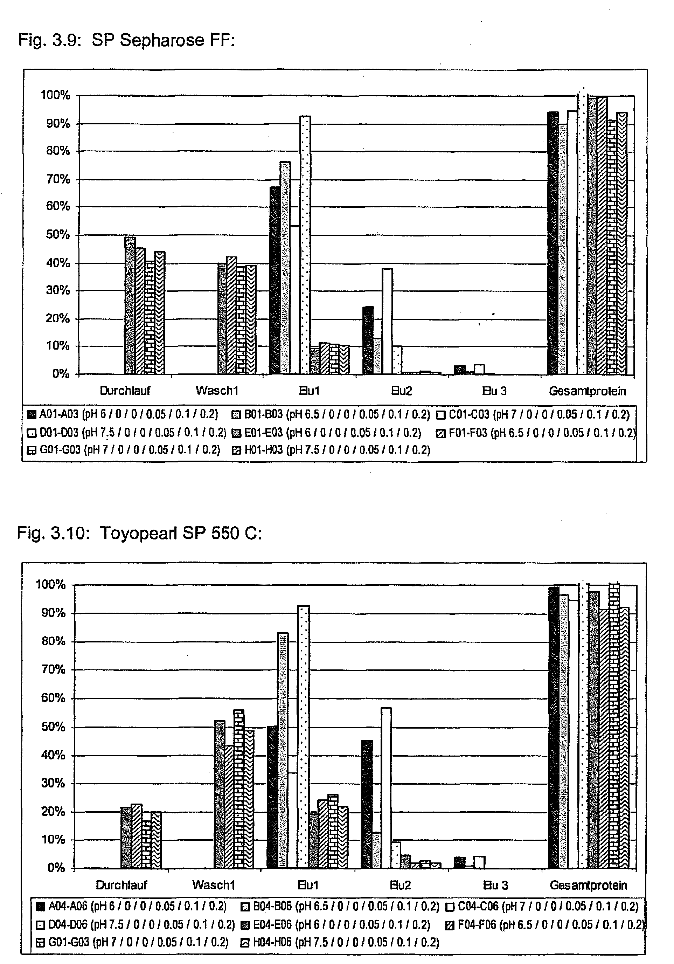

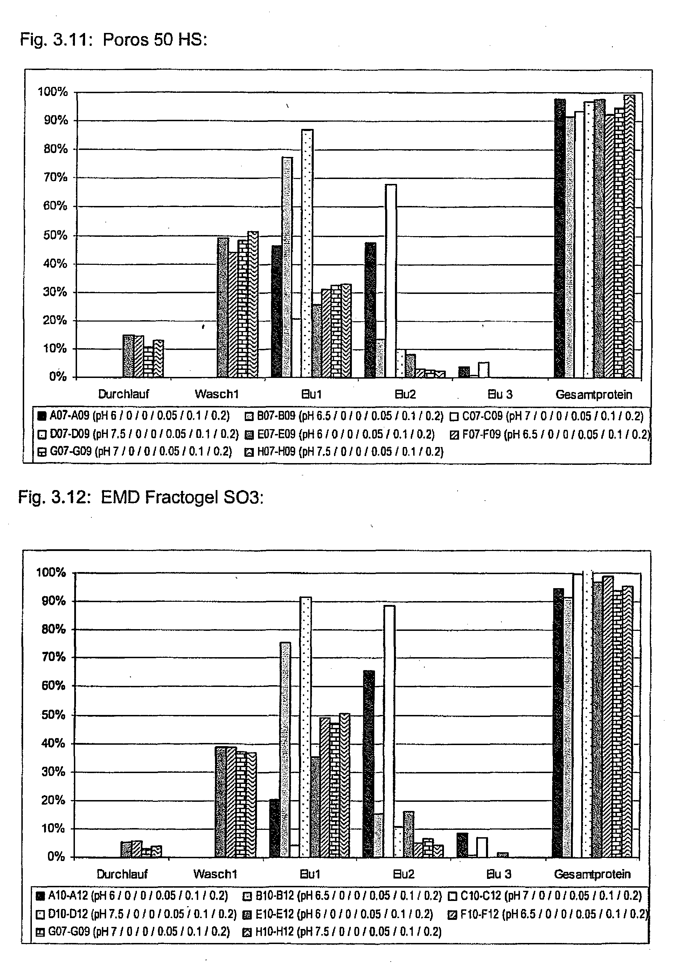

- **Fig. 3**: zeigt graphisch die Ergebnisse der in Beispiel 3 geschilderten Versuche, wobei in den 8 Abbildungen Fig. 3.1 bis Fig. 3.8 die Ergebnisse eines "Bindungsscreenings" mit 8 verschiedenen Chromatographiematerialien und in den 4 Abbildungen Fig. 3.9 bis Fig. 3.12 die Ergebnisse eines "Elutionsscreenings" mit 4 verschiedenen Chromatographiematerialien zusammengefasst sind. Aufgetragen sind jeweils die prozentualen Anteile der insgesamt eingesetzten Menge an Protein pro Kavität in den Durchläufen bzw. Eluaten beim Beladungsschritt ("Durchlauf"), dem Waschschritt ("Wasch1"), den drei Elutionsschritten "Elu1" bis "Elu3") und die Gesamtmenge an wiedergefundenem Protein ("Gesamtprotein"). Innerhalb jeder im Diagramm gezeigten Gruppe aus 8 Balken geben die einzelnen Balken die Ergebnisse bei unterschiedlichen, in der Legende angedeuteten pH- und Salzkonzentrationen wieder.

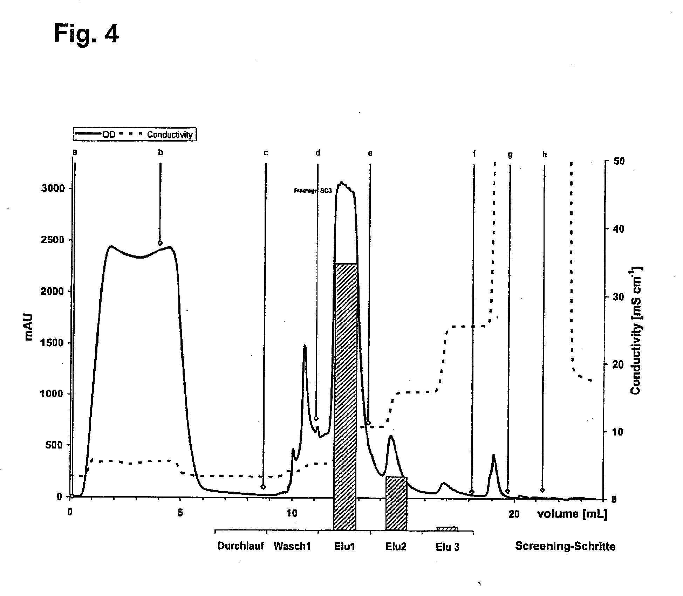

- **Fig. 4**: zeigt vergleichend das in Beispiel 4 erhaltende Elutionsprofil einer säulenchromatographischen Aufreinigung des Proteins mAb1 (durchgezogene Linie: Proteinkonzentration; gestrichelte Linie: Leitfähigkeit) und die mAb1-Konzentration bei einem Screen in Multi-Well-Filterplatten unter entsprechenden Bedingungen (Balken).

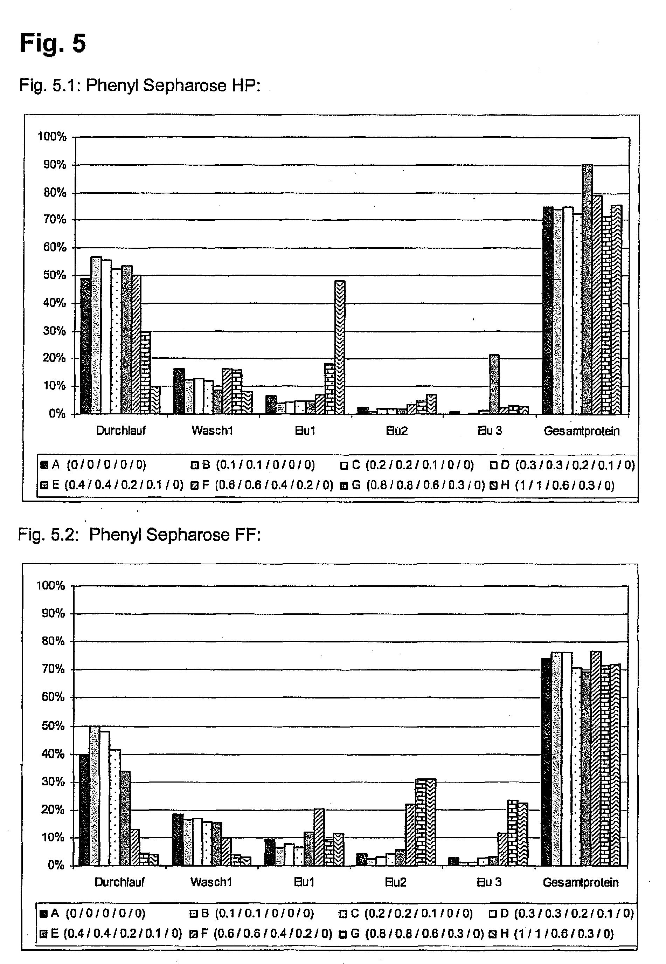

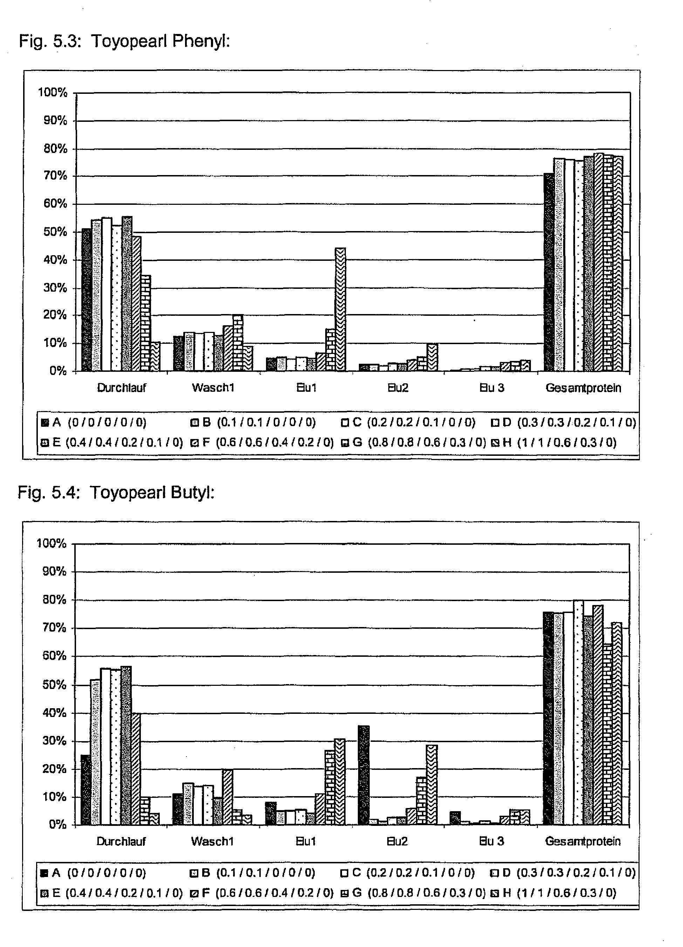

- **Fig. 5**: zeigt graphisch die Ergebnisse der in Beispiel 5 geschilderten Versuche, wobei in den Abbildungen **Fig. 5****.****1** bis **Fig. 5****.****4** die Ergebnisse des Screenings mit 4 verschiedenen Chromatographiematerialien gezeigt sind. Aufgetragen sind jeweils die prozentualen Anteile der insgesamt eingesetzten Menge an Protein pro Kavität in den Durchläufen bzw. Eluaten beim Beladungsschritt ("Durchlauf'), dem Waschschritt ("Wasch1"), den drei Elutionsschritten ("Elu1" bis "Elu3") und die Gesamtmenge an wiedergefundenem Protein ("Gesamtprotein"). Innerhalb jeder Gruppe aus 8 Balken geben die einzelnen Balken die Ergebnisse bei unterschiedlichen, in der Legende angedeuteten Salzkonzentrationen wieder.

### Genaue Beschreibung der Erfindung

Gemäß der Erfindung wird ein Verfahren zum Auffinden geeigneter Parameter für chromatographische Verfahren zur Trennung (Reinigung) biologischer Moleküle bereitgestellt, wobei das chromatographische Verfahren (einen oder mehrere) Equilibrierungsschritte, (einen oder mehrere) Beladungsschritte, (einen oder mehrere) Waschschritte und (einen oder mehrere) Elutionsschritte beinhaltet, dadurch gekennzeichnet, dass die Schrittfolge aus Equilibrierungs-, Beladungs-, Wasch- und Elutionsschritten im teilweisen Satzverfahren durchgeführt wird. Vorzugsweise beinhaltet zumindest der Beladungsschritt das Suspendieren des Chromatographiematerials und wird zumindest bei einem Elutionsschritt ein Suspendieren des Chromatographiematerials unterlassen. Gemäß der Erfindung wird beim Equilibrierungsschritt (oder den Equilibrierungsschritten) das Chromatographiematerial suspendiert. Gemäß zwei weiteren, alternativen Ausführungsformen der Erfindung wird bei dem oder den Waschschritten das Chromatographiematerial suspendiert bzw. nicht suspendiert. Bei all diesen Ausführungsformen wird vom teilweisen Satzverfahren Gebrauch gemacht, das darin besteht, einen Teil des Verfahrens - mindestens den Beladungsschritt - unter Suspension des Chromatographiematerials (also im "batch-Verfahren") auszuführen, während bei einem anderen Teil - zumindest bei der Elution des Biomoleküls - nach Art einer Säulenchromatographie das Chromatographiematerial nicht suspendiert wird sondern der Elutionspuffer auf das nicht suspendierte Gelbett aufgetragen wird und anschließend durch Zentrifugation, Anlegen eines Druckgefälles oder dergleichen das Eluat gewonnen wird.

Unter "Chromatographiematerial" werden alle herkömmlicherweise für die Säulenchromatographie verwendbaren Materialien verstanden. Diese können eingeteilt werden in Materialien für:
- Affinitätschromatographie,
- lonenaustauschchromatographie, insbesondere Anionionenaustausch- und Kationenaustauschchromatographie,
- hydrophobe Interaktionschromatographie,
- "reversed phase"-Chromatographie,
- Hydroxy-Apatit-Chromatographie,
- "hydrophobic charge induction"-Chromatographie und
- "mixed mode"-Chromatographie,
ohne dass die Erfindung auf diese Gruppen oder die nachfolgend ausdrücklich genannten Materialien beschränkt ist.

Materialien für die Affinitätschromatographie enthalten einen an ein Trägermaterial gebundenen Liganden, der die selektive und spezifische Bindung des zu reinigenden Biomoleküls an das Chromatographiematerial bewirkt. Bei der Reinigung von Antikörpern häufig verwendete Liganden sind Protein A, ein Zellwandprotein von *Staphylococcus aureus,* sowie verschiedene Varianten und Derivate hiervon.

Als funktionelle Gruppen an für die Anionenaustauschchromatographie geeigneten Chromatographiematerialien können z.B. die quarternäre Hydroxypropyldiethylaminoethylgruppe, die quarternäre Trimethylaminoethylgruppe oder die Diethylaminoethylgruppe verwendet werden. Geeignete Gruppen für die Kationenaustauschchromatographie sind z.B. die Sulfomethylgruppe, die Sulfopropylgruppe und die Carboxymethylgruppe.

Bei der hydrophoben Interaktionschromatographie können z.B. Alkyl- und ArylLiganden verwendet, wie etwa Ether- und Methyl-Liganden (schwächere Wechselwirkung mit Proteinen) oder Butyl-, Phenyl- und Oktyl-Liganden (stärkere Wechselwirkung).

Bei der "reversed phase"-Chromatographie werden ebenfalls Alkyl- oder ArylLiganden verwendet, wobei die Ligandendichte typischerweise höher als bei der hydrophoben Interaktionschromatographie ist.

Für die "mixed mode"-und die "hydrophobic charge induction"-Chromatographie werden insbesondere Liganden verwendet,welche je nach pH-Wert unterschiedliche Wechselwirkungen mit dem Biomolekül eingehen (wie etwa MBI HyperCel® Sorbent und MEP HyperCel® Sorbent von BioSepra).

Die Equilibrierungspufferlösungen, Testlösungen, Waschlösungen und Elutionslösungen (nachfolgend allgemein als "Pufferlösungen" bezeichnet) können Lösungen auf der Basis von z.B. Phosphat-, Tris-, Acetat-, Citrat-, oder Glycinpuffer sein.

Das Aufschlämmen des Chromatographiematerials erfolgt z.B. durch (hochfrequentes) Schütteln der Probengefäße (z.B. unter Einsatz eines mechanischen Schüttlers) oder durch Auf- und Abpipettieren des Chromatographiematerials.

Insbesondere beim Beladungsschritt kann es notwendig sein, nach Zugabe der das Biomolekül enthaltenden Testlösung zum Chromatographiematerial einen Inkubationsschritt anzuschließen. Bei zu kurzer Inkubation des Chromatographiematerials mit der Testlösung kann das Problem auftreten, dass das Biomolekül nicht vollständig an das Chromatographiematerial gebunden hat bevor die Testlösung durch die Waschlösung ersetzt wird. Bei zu langer Inkubationszeit besteht bei vielen Biomolekülen die Gefahr, dass eine Denaturierung des Biomoleküls einsetzt. Je nach Art des Biomoleküls, des Testpuffers und des Chromatographiematerials ist also die Inkubationsdauer zwischen den o.g. Extremen zu wählen. Häufig wird die ermittelte optimale Inkubationsdauer 120 min nicht überschreiten. Bevorzugt wird nicht länger als 60 min inkubiert. Besonders bevorzugt sind Inkubationszeiten von weniger als 30 min.

Der "Waschschritt" im Sinne dieser Erfindung ist der auf die Beladung des Chromatographiematerials mit dem Biomolekül folgende Schritt. Je nach Problemstellung kann beabsichtigt sein, bereits bei diesem Schritt eine Elution des Biomoleküls zu bewirken. In diesem Fall stellt der Waschschritt bereits einen Elutionsschritt dar, fallen also Wasch- und Elutionsschritt zusammen.

Je nach Problemstellung kann die Testlösung beim Beladungsschritt ein definiertes Biomolekül oder auch ein Gemisch an Biomolekülen enthalten. Je nach Fragestellung kann es sich bei dem definierten Biomolekül um z.B. ein Protein handdeln, das in dem zu etablierenden und zu optimierenden Prozess in großem Maßstab gereinigt werden soll, oder auch um eine definierte Verunreinigung, wie etwa um Aggregate des zu reinigenden Proteins oder um Protein A (um die Abtrennbarkeit von in einem vorangehenden Reinigungsschritt ggf. von einer Protein A-Säule freigesetzten "leach Protein A" zu untersuchen). Das Gemisch kann z.B. ein Zelllysat, ggf. nach vorangehenden Zentrifugations- und/oder Filtrationsschritten sein, wie etwa ein später in großem Maßstab als Ausgangsmaterial für die Reinigung dienendes Gemisch von "host cell"- Proteinen (HCP) mit überexprimiertem Zielprotein.

Wie eingangs erläutert kann das oben beschriebene, in kleinem Maßstab durchgeführte teilweise Satzverfahren dazu dienen, Chromatographiebedingungen zu ermitteln, unter denen dann auch das entsprechende, in großem Maßstab durchzuführende säulenchromatographische Reinigungsverfahren optimale Ergebnisse liefern wird. Ob die jeweils gewählten Bedingungen wie Art des Chromatographiematerials, Art des Puffers, Inenstärke/Leitfähigkeit, pH-Wert, etc. ein mehr oder weniger gutes Ergebnis liefern, kann in üblicher Weise dadurch ermittelt werden, dass man die Durchläufe zumindest des Elutionsschritts bzw. der Elutionsschritte im Hinblick auf Menge und Qualität (z.B. noch vorhandene biologische Aktivität) des eluierten Biomoleküls analysiert. Vorzugsweise wird außerdem auch der Durchlauf des Beladungsschritts und des Waschschritts (bzw. der Waschschritte) aufgefangen und in gleicher Weise analysiert, um so ein vollständiges Bild über die Bindungseigenschaften des Biomoleküls bei diesen Schritten unter den jeweils gewählten Bedingungen zu erhalten. Die Art der Aufarbeitung und Analyse der Durchläufe und Eluate hängt von der Art der Chromatographie und des Probenmaterials, also des Biomoleküls bzw. des Gemisches an Biomolekülen ab. Im Falle einer Protein-A-Affinitätschromatographie und der Beladung der Säule mit einem Gemisch von HCPs und überexprimiertem Ziel-Protein (Immunglobulin) wird z.B. von Interesse sein, wie groß der Anteil des beim Beladungsschritt mit der Testlösung zugegebenen Immuriglobulins ist, der an das Chromatographiematerial gebunden hat (also nicht im Durchlauf des Beladungsschritts wiederzufinden ist), welche Menge an Immunglobulin und an Verunreinigungen bei dem oder den Waschschritten im Durchlauf erscheint, und in welcher Menge und Reinheit das Immunglobulin bei dem oder den Elutionsschritten im Eluat wiederzufinden ist und welcher Anteil noch die gewünschte biologische Aktivität aufweist. Diese Bestimmungen können in herkömmlicher Weise, z.B. durch spektroskopische Methoden und sonstige Proteinbestimmungsmethoden vorgenommen werden. Der Gehalt an Verunreinigungen kann z.B. über SDS-Gelelektrophorese oder Verfahren der isoelektrischen Fokussierung sichtbar gemacht und quantifiziert werden.

Gemäß einer besonderen Ausführungsform der Erfindung werden bei einer lonenaustauschchromatographie Beladungs- und Elutionsbedingungen in getrennten Versuchen optimiert (Bindungs- und Elutionsscreening) und werden jedenfalls beim Elutionsscreening mehrere Elutionsschritte vorgesehen, wobei mit jedem Schritt stufenartig z.B. die Salzkonzentration verändert wird.

In einer bevorzugten Ausführungsform werden die Equilibrierungs-, Beladungs-, Wasch-, und Elutionsschritte in mehreren parallelen Ansätzen durchgeführt. Hierbei werden zur Ermittlung der optimalen Chromatographiebedingungen zweckmäßigerweise diese Bedingungen bei den einzelnen Ansätzen variiert, so dass aus den in den jeweiligen, parallel durchgeführten Ansätzen erzielbaren Reinigungsresultaten auf die für das jeweilige Biomolekül und/oder Chromatographiematerial optimalen Chromatographiebedingungen rückgeschlossen werden kann. Die Durchführung in parallelen Ansätzen kann unter Verwendung einer Multi-Well-Filterplatte erfolgen, auf der eine Mehrzahl an Probenaufnahmebehältnissen vorgesehen ist, in die das Chromatographiematerial und die Pufferlösungen (wie etwa Equilibrierungspufferlösungen, Testlösungen, ggf. enthaltend ein Biomolekül, Waschlösungen und Elutionslösungen) aufgenommen werden, wobei diese Behältnisse bodenseitig durch ein Material mit Filtereigenschaft abgeschlossen sind, das den Austritt der Pufferlösung, nicht aber des Chromatographiematerials erlaubt. Solche Multi-Well- oder Mikrotiterfilterplatten sind z.B. unter dem Markennamen Captiva® von Varian® (96 Vertiefungen, Porengröße 0,45 µm), MultiScreen®) von Millipore® (96 Vertiefungen, Porengrößen 0,22 µm, 0,45 µm und 0,65 µm) und Silent Screen® von Nunc® (96 Vertiefungen und einer Porengröße von 0,45 µm) erhältlich. Die Chromatographielösungen und Pufferlösungen können mit einer herkömmlichen Mehrkanal-Pipette oder einem Pipettierroboter (z.B. Freedom Evo 150® von Tecan®) in die auf der Platte befindlichen Probenaufnahmebehältnisse pipettiert werden.

Die Volumina der in die Vertiefungen pipettierten Chromatographiematerialien und Pufferlösungen können variieren und liegen bei Verwendung einer der o.g. Filterplatten mit 96 Vertiefungen vorzugsweise im Bereich von 0,01 bis 2 mL, weiter vorzugsweise im Bereich von 0,05 bis 2 mL. Bei der initialen Beladung der Filterplatten mit Chromatographiematerial hat es sich als vorteilhaft erwiesen, die Filterplatten zunächst mit einer z.B. 20%igen oder 10%igen Ethanollösung zu spülen und anschließend das Chromatographiematerial als 1 bis 60%ige (w/v) Aufschlämmung in 20%iger oder 10%iger Ethanollösung zuzugeben.

Die Durchführung des erfindungsgemäßen Verfahrens in parallelen Ansätzen erlaubt die gleichzeitige Optimierung mehrerer säulenchromatographischer Parameter und eröffnet damit die Möglichkeit in sehr kurzer Zeit und unter Einsatz geringer Materialmengen einen säulenchromatographischen Prozess zu entwickeln, der unter den so ermittelten Bedingungen auch in großtechnischem Maßstab ein ausgezeichnetes Reinigungsergebnis liefern wird. Damit können bessere Prozesse bereitgestellt werden und kann teure Entwicklungszeit und teures Material (Chromatographiematerial, Biomoleküle, etc.) eingespart werden.

Gemäß einer ganz besonders bevorzugten Ausführungsform wird das Verfahren gemäß der folgenden Schrittfolge durchgeführt (s. auch Fig. 1):
(a) eine Aufschlämmung eines Chromatographiematerials wird in eine Mehrzahl von Vertiefungen (Probenaufnahmebehältnisse) einer Multi-Well-Filterplatte gegeben,
(b) in den mit der Aufschlämmung versehenen Vertiefungen wird ein feuchtes Gelbett erzeugt, indem der Überstand über dem Chromatographiematerial durch Zentrifugation oder durch Anlegen eines Druckunterschieds entfernt wird,
(c) zur Equilibrierung des in den Vertiefungen befindlichen Chromatographiematerials wird dem feuchten Gelbett eine Equilibrierungspufferlösung zugegeben und das Gelbett wird aufgeschlämmt und optional für einen gewissen Zeitraum mit der Lösung inkubiert (Equilibrierungsschritt),
(d) entsprechend Schritt (b) wird ein feuchtes Gelbett erzeugt,
(e) optional werden die Schritte (c) und (d) mehrmals, insbesondere einmal, zweimal oder dreimal wiederholt,
(f) zur Beladung des Chromatographiematerials wird dem Gelbett eine Testlösung zugegeben, die mindestens ein Biomolekül enthält, und wird das Gelbett aufgeschlämmt und optional mit der Beladungslösung inkubiert (Beladungsschritt),
(g) entsprechend Schritt (b) wird ein feuchtes Gelbett erzeugt,
(h) zum Waschen des Chromatographiematerials wird dem Gelbett eine Waschlösung zugegeben, wobei optional das Gelbett aufgeschlämmt wird und wieder optional inkubiert wird (Waschschritt),
(i) entsprechend Schritt (b) wird ein feuchtes Gelbett erzeugt,
(k) optional werden die Schritte (h) und (i) mehrfach, insbesondere einmal, zweimal oder dreimal wiederholt, wobei die verwendeten Waschlösungen dieselbe oder unterschiedliche Zusammensetzungen aufweisen können und dabei optional das Gelbett aufgeschlämmt oder nicht aufgeschlämmt wird,
(l) zur Elution des Biomoleküls wird dem Gelbett eine Elutionslösung zugegeben ohne dabei eine Aufschlämmung des Gelbetts zu bewirken (Elutionsschritt), (m) entsprechend Schritt (b) wird ein feuchtes Gelbett erzeugt und hierbei das Eluat aufgefangen,
(n) optional werden die Schritte (I) und (m) mehrfach, insbesondere einmal, zweimal oder dreimal wiederholt, wobei die verwendeten Elutionslösungen dieselbe oder unterschiedliche Zusammensetzungen aufweisen können, und
(o) die aufgefangenen Eluate werden analysiert.

Nach Analyse der Eluate und der ggf. ebenfalls aufgefangenen weiteren Durchläufe im Hinblick auf Konzentration und biologische Aktivität (wie etwa spezifische Bindungseigenschaften) mit herkömmlichen Verfahren wird der Fachmann in der Lage sein zu erkennen, welcher Ansatz die besten Ergebnisse geliefert hat und kann so darauf zurückschließen, unter welchen Bedingungen die einzelnen Schritte zum Erzielen optimaler Ergebnisse durchgeführt werden müssen.

Die Erfindung wird nachfolgend anhand von Beispielen weiter erläutert, ohne dass der Gegenstand der Erfindung auf diese Beispiele begrenzt wäre.

### Beispiele

### Beispiel 1: Allgemeine Arbeitsanleitung zur Durchführung des Verfahrens gemäß einer Ausführungsform der Erfindung (automatisierte Ausführung in mehreren parallelen Ansätzen)

Eine Multi-Well-Filterplatte wird in einem ersten Schritt mit zwanzigprozentiger Ethanollösung gespült. Hierzu wird die Lösung in die Platte gefüllt und diese zentrifugiert, wobei die so abzentrifugierte Ethanollösung in einer darunter liegenden Mikrotiterplatte aufgefangen und anschließend verworfen wird. Anschließend wird die Filterplatte mit den jeweiligen Suspensionen der Chromatographiematerialien befüllt. Bei Bedarf kann zusätzlich weitere zwanzigprozentige Ethanollösung auf die Suspensionen gegeben werden. Durch Zentrifugation setzt sich das Material ab und die Flüssigkeit wird soweit entfernt, dass die Materialien gerade nicht trocken sind. Der Durchlauf wird ebenfalls verworfen. Anschließend erfolgt die Equilibrierung des Chromatographiematerials (vgl. hierzu auch Fig. 1). Hierzu wird Puffer, welcher den Equilibrierungsbedingungen entspricht, auf das Chromatographiematerial gegeben. Danach wird die Platte zur Durchmischung von Puffer und Material auf dem Mikrotiterplatten-Schüttler bei höchster Drehzahl inkubiert und anschließend der Puffer wieder abzentrifugiert und verworfen. Dieser Schritt wird gemäß dem beispielhaften Übersichtsschema in Fig. 1 einmal wiederholt.

Beim anschließenden Beladungsschritt werden die vorbereiteten Proteinlösungen, bei welchen zuvor die gleichen pH-Werte und Salzgehalte wie bei der Equilibrierung eingestellt worden sind, auf das Chromatographiematerial gegeben und auf dem Mikrotiterplatten-Schüttler inkubiert. Das Filtrat bildet den Durchlauf (FT). In den dann folgenden Wasch- und Elutionsschritten wird entsprechend eingestellter Puffer (s. z.B. Beispiele 3 und 5) auf die Chromatographiematerialien gegeben. Optional kann auch bei den Waschschritten wiederum aufgeschüttelt und inkubiert werden, während bei der Elution ein solches Aufschüttein unterbleibt ("teilweises Satzverfahren"). Die flüssige Phase wird jeweils abzentrifugiert. Die Filtrate der Waschschritte werden mit "W" oder "Wasch" und einer fortlaufenden Nummer, die der Elutionsschritte analog mit "E" oder "Elu" und einer fortlaufenden Nummer versehen. Zum Schluss werden jeweils 150 µL aller nicht verworfenen Filtrate für die photometrische Gehaltsbestimmung bei 280 nm in geeignete Mikrotiterplatten übertragen.

Vorzugsweise wird beim Equilibrieren, Beladen und Waschen jeweils aufgeschüttelt und inkubiert. Bei der Elution, die typischerweise (s. z.B. Beispiele 3 und 5) unter Änderung des pH-Werts und/oder Salzgehalts durchgeführt wird, wird der Elutionspuffer dagegen vorsichtig auf die Chromatographiematerialien gegeben und ohne Aufmischen und Inkubation sofort hindurch zentrifugiert.

Tabelle 1 zeigt einen typischen Ablauf der o.g. Schritte, einschließlich beispielhafter Angaben zu typischen Inkubationszeiten. Der Waschpuffer entspricht dabei bzgl. pH-Wert und Salzgehalt dem Equilibrierungspuffer. Die Volumina und Zentrifugationseinstellungen sind vorliegend auf Silent Screen® Multi-Well-Filterplatte von Nunc® eingestellt. 2200 rpm (Umdrehungen je Minute) entsprechen einer relativen Zentrifugalbeschleunigung von 1012 g, 1200 rpm entsprechen 301 g. Die Inkubation erfolgt auf dem Mikrotiterplatten-Schüttler bei höchster Drehzahl, das sind etwa 1400 rpm:

**Tabelle 1:**

| Schritt | Flüssigkeitszugabe | | Inkubionszeit | Zentrifugation | | Häufigkeit |
|---|---|---|---|---|---|---|
| | Volumen | Art | | Drehzahl | Dauer | |
| Spülen | 350 µL | 20%ige Etanollösung | - | 2200 rpm | 1 Minute | 1x |
| Befüllen mit Chromatographiemedien | 100 µL | Suspension | | | | |
| | 100 µL | 20%igeEtanollösung | - | 1200 rpm | 1 Minute | 1x |
| Equilibrieren | 200 µL | Equilibrierungspuffer | 5 Minuten | 1200 rpm | 1 Minute | 2x |
| Beladen | 200 µL | Proteinlösung | 21 Minuten | 1200 rpm | 1 Minute | 1x |
| Waschen | 200 µL | Waschpuffer | 9 Minuten | 1200 rpm | 1 Minute | 0-4x |
| Eluieren | 200 µL | Elutionspuffer | - | 1200 rpm | 1 Minute | 0-5x |

Zur automatisierten Durchführung in mehreren parallelen Ansätzen wird vorzugsweise ein Pipettierroboter eingesetzt. In Fig. 2 ist eine typische Anordnung gezeigt, die bei dieser Art der Durchführung eingesetzt werden kann. Dabei enthält der Trog (1) die o.g. Ethanollösung. Die das Biomolekül enthaltenden, auf geeignete pH-Werte und Salzkonzentrationen eingestellten Testlösungen und die Suspensionen der Chromatographiematerialien befinden sich in den Probengefäßen (2) und (3). An Position (4) sind Mikrotiterplatten / DWPs vorgesehen, die die Equilibrierungs-, Wasch- und Elutionspuffer enthalten. Daneben ist die Multi-Well-Filterplatte (5) angeordnet.

### Beispiel 2: Vergleich zweier Ausführungsformen des "teilweisen Satzverfahrens" mit einem (Voll-)Satzverfahren ("batch"-Verfahren)

Das teilweise Satzverfahren wurde mit einem batch-Verfahren verglichen. Bei letzterem wird bei allen Schritten aufgeschüttelt und inkubiert. Beim erfindungsgemäßen teilweisen Satzverfahren wird hingegen bei den Equilibrierungs- und Beladungsschritten aufgeschüttelt, inkubiert und zentrifugiert (bzw. in anderer Weise der Überstand vom Chromatographiematerial entfernt), bei den Elutionsschritten aber sofort zentrifugiert (bzw. in anderer Weise der Überstand vom Chromatographiematerial entfernt). Gemäß einer Ausführungsform der Erfindung wird beim Waschschritt ebenfalls aufgeschüttelt und inkubiert, gemäß einer zweiten Ausführungsform auch beim Waschschritt der Waschpuffer nur vorsichtig aufgetragen und sofort abzentrifugiert/entfernt.

Um beurteilen zu können, welches Verfahren die besten Aussagen über geeignete Chromatographiebedingungen liefert, wurden die o.g. Verfahren anhand der Aufreinigung eines Antikörpers durch hydrophobe Interaktionschromatographie getestet. Als Chromatographiematerial wurde Phenyl Sepharose 6 FF verwendet. Der verwendete Antikörper bindet; wenn die Leitfähigkeit eines 50 mM TRIS-Puffers mit pH = 6,5 mit Ammoniumsulfat auf 120 mS·cm⁻¹ erhöht wird. Daher wurden Equilibrierungs- und Waschpuffer sowie die proteinhaltige Beladungslösung auf diese Bedingungen eingestellt. Der Elutionspuffer enthielt weniger Ammoniumsulfat, seine Leitfähigkeit betrug 50 mS·cm⁻¹. Die Inkubationszeit bei der Equilibrierung betrug jeweils fünf Minuten, bei der Beladung 21 Minuten und beim Waschen gegebenenfalls neun Minuten. Die Wiederfindungsraten in den aufgefangenen Fraktionen (Durchlauf bei Beladung: FT; Waschschritte: W1 bis W3, Elutionsschritte: E1 bis E4) sind in Tabelle 2 dargestellt. Tabelle 2:

| Fraktion | FT | W1 | W2 | W3 | E1 | E2 | E3 | E4 | Summe |
|---|---|---|---|---|---|---|---|---|---|
| **Teilweises Satzverfahren Waschschritte mit Aufschlämmen:** | | | | | | | | | |
| Mittelwert | 2,4% | 2,8% | 2,4% | 2,2% | 42,0% | 17,6% | 8,7% | 5,2% | 83,2% |
| Standardabweichung | 0,7% | 0,4% | 0,4% | 0,3% | 1,9% | 0,8% | 0,4% | 0,2% | |

| **Teilweises Satzverfahren / Waschschritte ohne Aufschlämmen:** | | | | | | | | | |
|---|---|---|---|---|---|---|---|---|---|
| Mittelwert | 6,9% | 3,6% | 1,3% | 0,4% | 33,3% | 19.1% | 8,5% | 5,2% | 78,2% |
| Standardabweichung | 4,0% | 1,5% | 0,4% | 0,1% | 3,1% | 1,5% | 1,0% | 0,7% | |

| **Satzverfahren / batch-Verfahren:** | | | | | | | | | |
|---|---|---|---|---|---|---|---|---|---|
| Mittelwert | 2,2% | 2,8% | 2,0% | 1,5% | 30.2% | 16.4% | 7,7% | 3,8% | 66,5% |
| Standardabweichung | 0,3% | 1,2% | 0,2% | 0,1% | 4,0% | 3,4% | 2,5% | 1.3% | |

Wie aus Tabelle 2 klar ersichtlich ist, ist die Wiederfindungsrate bei den teilweisen Satzverfahren mit 83,2 % bzw. 78,2 % erheblich höher als beim batch-Verfahren, bei dem nur etwa zwei Drittel des Materials wiedergefunden werden konnten. Darüber hinaus zeigt dieser Versuch, dass beim batch-Verfahren insbesondere bei den Elutionsschritten die Reproduzierbarkeit deutlich schlechter als beim teilweisen Satzverfahren ist (größere Standardabweichungen). In dieser Hinsicht liefert das teilweise Satzverfahren gemäß der Ausführungsform mit Suspendieren beim Waschschritt ganz besonders gute Ergebnisse. Eine verlässliche Reproduzierbarkeit der Ergebnisse ist eine wichtige Voraussetzung für die Übertragbarkeit der so ermittelten optimalen Chromatographiebedingungen auf in größerem Maßstab durchgeführte Säulenchromatographieprozessschritte.

### Beispiel 3: Verwendung des erfindungsgemäßen Verfahrens zum Screenen nach geeigneten Kationentauschermaterialien und geeigneten Chromatographiebedingungen bei der Reinigung eines monoklonalen Antikörpers

Bei der Herstellung von Antikörpern in eukaryontischen Zellkulturen liegt das Zielprotein typischerweise als ins Medium sekretiertes Protein in einer komplexen Mischung mit anderen Biomolekülen vor. Für den monoklonalen Antikörper mAb1 wurde folgendes Screening durchgeführt, um optimale Bedingungen für die Anreicherung des Antikörpers mittels eines Kationentauschers zu bestimmen:

### Bindungsscreening:

Zwei Screening-Läufe dienten zum Ermitteln der optimalen Chromatographiematerialien und der jeweils idealen Bindebedingungen (Bindungsscreening). Die folgenden Chromatographiematerialien wurden getestet:
Lauf 1: SP Sepharose®, Toyopearl® SP 650 M, Toyopearl® SP 550 C, EMD Fractogel® SO3
Lauf 2: CM Ceramic Hyper DLS®, S Ceramic Hyper DF®, Poros 50 HS®, CM Sepharose FF.

SP und HS steht hierbei für die Sulfopropyl-Gruppe als funktionelle Gruppe, die an die Grundmatrix des Chromatographiematerials kovalent gekoppelt ist, S03 für die Sulfoisobutyl-Gruppe, CM für die Carboxymethyl-Gruppe, S für die Sulfonsäure-Gruppe.

Die eingesetzten Proteinlösungen, also die nach Fermentierung der Expressionszellen durch Zentrifugation und Filtration erhaltenen Zellkulturüberstände, wurden auf die in Tabelle 3.1 angegebenen Bedingungen eingestellt:

**Tabelle 3.1: Bedingungen für die Beladungspools (Testlösungen enthaltend mAb1) in Lauf 1 und 2**

| | Pool 1 | Pool 2 | Pool 3 | Pool 4 | Pool 5 | Pool 6 | Pool 7 | Pool 8 |
|---|---|---|---|---|---|---|---|---|
| pH | 4,0 | 4,5 | 5,0 | 5,5 | 6,0 | 7,0 | 7,5 | 5,0 |
| Volumen [ml] | 2,6 | 2,6 | 2,6 | 2,6 | 2,6 | 2,6 | 2,6 | 2,6 |
| Gehalt [mg/ml] | 2,0 | 2,0 | 2,0 | 2,0 | 2,0 | 2,0 | 2,0 | 2,0 |

Es wurden 10 %-ige Suspensionen der Chromatographiematerialien in 20 %-iger Ethanollösung verwendet und 0,05 ml Gelbett erzeugt. Das Screening wurde im oben beschrieben teilweisen Satzverfahren (mit Suspendieren beim Waschschritt) durchgeführt. Nach zwei Equilibrierungsschritten folgte die Beladung mit den Proteinlösungen (Testlösungen enthaltend mAb1; siehe Tabelle 3.1) und ein Waschschritt. Eluiert wurde anschließend in drei Schritten. Die Puffer wurden wie in Tabelle 3.2 und 3.3 angegeben jeweils in zwei "Deep Well"-Platten (Multi-Well-Platten mit 2 mL Fassungsvermögen; nachfolgend auch mit "DWP" bezeichnet) nach dem in Beispiel 1 beschriebenen Versuchsaufbau vorgelegt. Von jeder Bedingung wurde eine dreifache Bestimmung gemacht, welche bei der anschließenden Bestimmung der Antikörperkonzentrationen mittels rProtA-HPLC (analytische Affinitäts-Chromatographie mittels an eine Grundmatrix gekoppeltem rekombinanten Protein A) zusammengeführt wurden.

**Tabelle 3.2: Pufferbedingungen und Anordnung auf der "Deep Well"-Platte 1**

| Equilibrierung 1 (DWP1.1 Spalte 1-4) | Equilibrierung 2 (DWP1.2 Spalte 5-8) | Waschen (DWP1.3 Spalte 9-12) |
|---|---|---|
| | 50 mM Acetat pH 4,0 | |
| | 50 mM Acetat pH 4,5 | |
| | 50 mM Acetat pH 5,0 | |
| | 50 mM Phosphat pH 5,5 | |
| | 50 mM Phosphat pH 6,0 | |
| | 50 mM Tris pH 6,5 | |
| | 50 mM Tris pH 7,0 | |
| | 50 mM Acetat pH 5,0 | |

**Tabelle 3.3: Pufferbedingungen und Anordnung auf der "Deep Well"-Platte 2**

| Elution 1 (DWP2.1 Spalte 1-4) | Elution 2 (DWP2.2 Spalte 5-8) | Elution 3 (DWP2.3 Spalte 9-12) | pH Wert |
|---|---|---|---|
| 50 mM Tris 0,3 M NaCl | 50 mM Tris 0,6 M NaCl | 50 mM Tris 1 M NaCl | pH 9,0 |

Die in den Durchläufen bzw. Eluaten gefundenen mAB1-Konzentrationen in den einzelnen Fraktionen sind in den Abbildungen 3.1 bis 3.8 dargestellt. Aufgrund der Wiederfindung, der mit ausgewählten Fraktionen durchgeführten SDS-PAGE Analyse und des Bindungsverhaltens wurden die folgenden Chromatographiematrizes für ein Elutionsscreening (Screening nach optimalen Elutionsbedingungen) ausgewählt: SP Sepharose® FF, Toyopearl® SP 650 M, Poros® 50 HS, EMD Fractogel® S03.

### Elutionsscreening:

Im Elutionsscreening wurden die mAb1 enthaltenden zellfreien Kulturüberstände wie in Tabelle 3.4 gezeigt auf die pH-Werte 5,0 und 6,5 eingestellt:

**Tabelle 3.4: Bedingungen für die Beladungspools (Testlösungen enthaltend mAb1) in Lauf 1 und 2**

| | Pool 1 | Pool 2 | Pool 3 | Pool 4 | Pool 5 | Pool 6 | Pool 7 | Pool 8 |
|---|---|---|---|---|---|---|---|---|
| pH | 5,0 | 5,0 | 5,0 | 5,0 | 6,5 | 6,5 | 6,5 | 6,5 |
| Volumen [ml] | 2,6 | 2,6 | 2,6 | 2,6 | 2,6 | 2,6 | 2,6 | 2,6 |
| Gehalt [mg/ml] | 2,0 | 2,0 | 2,0 | 2,0 | 2,0 | 2,0 | 2,0 | 2,0 |

Für die Equilibrierungs-, Wasch-, und Elutionsschritte wurden die in Tabelle 3.5 und 3.6 aufgeführten Puffer in die "Deep Well"-Platten eingefüllt:

**Tabelle 3.5: Pufferbedingungen und Anordnung auf der "Deep Well"-Platte 1**

| Equilibrierung 1 (DWP1.1 Spalte 1-4) | Equilibrierung 2 (DWP1.2 Spalte 5-8) | waschen (DWP1.3 Spalte 9-12) |
|---|---|---|
| | 50 mM Acetat pH 5,0 | |
| | 50 mM Acetat pH 5,0 | |
| | 50 mM Acetat pH 5,0 | |
| | 50 mM Acetat pH 5,0 | |
| | 50 mM Phosphat pH 6,5 | |
| | 50 mM Phosphat pH 6,5 | |
| | 50 mM Phosphat pH 6,5 | |
| | 50 mM Phosphat pH 6,5 | |

**Tabelle 3.6: Pufferbedingungen und Anordnung auf der "Deep Well"-Platte 2**

| Elution 1 (DWP2.1 Spalte 1-4) | Elution 2 (DWP2.2 Spalte 5-8) | Elution 3 (DWP2.3 Spalte 9-12) | pH Wert |
|---|---|---|---|
| 50 mM Phosphat, 50 mM NaCl | + 100 mM NaCl | + 200 mM NaCl | 6,0 |
| 50 mM Phosphat, 50 mM NaCl | + 100 mM NaCl | + 200 mM NaCl | 6,5 |
| 50 mM Tris, 50 mM NaCl | + 100 mM NaCl | + 200 mM NaCl | 7,0 |
| 50 mM Tris, 50 mM NaCl | + 100 mM NaCl | + 200 mM NaCl | 7,5 |
| 50 mM Phosphat, 50 mM NaCl | + 100 mM NaCl | + 200 mM NaCl | 6,0 |
| 50 mM Phosphat, 50 mM NaCl | + 100 mM NaCl | + 200 mM NaCl | 6,5 |
| 50 mM Tris, 50 mM NaCl | + 100 mM NaCl | + 200 mM NaCl | 7,0 |
| 50 mM Tris, 50 mM NaCl | + 100 mM NaCl | + 200 mM NaCl | 7,5 |

In den Abbildungen Fig. 3.9 bis Fig. 3.12 sind die prozentualen Anteile der aufgetragenen Gesamtmenge mAb1 pro Well in den einzelnen Schritten unter den angegebenen Bedingungen graphisch dargestellt. Im Hinblick auf die Wiederfindungsrate des Zielproteins und auf vorteilhaft niedrige Salzkonzentrationen (Minimierung erwünscht mit Blick z.B. auf die Kosten bei Übertragung auf industrielle Maßstäbe) wurden als geeignete Bedingungen die Beladung bei pH 5 und die Elution bei pH 6.5 und 0.05 M Salz auf EMD Fractogel® S03 identifiziert (s. Fig. 3.12, B10-B12).

### Beispiel 4: Korrelierbarkeit der Ergebnisse des erfindungsgemäßen Screeningverfahrens in Mikro-Well-Filterplatten mit den Ergebnissen konventioneller Säulenversuche

Unter Anwendung der in Beispiel 3 ermittelten optimierten Bedingungen wurden Säulenchromatographieversuche mit 1 ml Bettvolumen durchgeführt. Der Fluß betrug 0,5 ml/min. Die Beladung der Säule erfolgte mit einer Salzkonzentration von 0 M NaCl bei pH 5. Bei den gleichen Bedingungen erfolgte der Waschschritt. Für die Elution wurde ein Stufengradient von 0 / 0,05 / 0,1 / 0,2 M NaCl verwendet. Dieser bildet die Bedingungen des Screens in der Mikro-Well-Filterplatte nach, bei dem EMD Fractogel® SO3 verwendet worden war und der Bindungsschritt bei pH 5 und die Elutionsschritte bei pH 6,5 durchgeführt worden waren.

In Fig. 4 sind das Elutionsprofil der in obiger Weise durchgeführten Säulenchromatographie (durchgezogene Linie: Proteinkonzentration; gestrichelte Linie: Leitfähigkeit) und die die prozentualen Anteile der aufgetragenen Gesamtmenge mAb1 pro Well, wie sie bei erfindungsgemäßem Screenen in Multi-Well-Filterplatten unter den entsprechenden Bedingungen in Beispiel 3 erhalten wurden (Balken), übereinandergelegt. Aus der weiteren Analyse der Durchläufe und Eluate über SDS-PAGE konnte nachgewiesen werden, dass die Verteilung des mAb1-Produkts in den Peaks mit der im Screening übereinstimmt, also angereicherter mAb1 in den entsprechenden Eluaten vorhanden war. Dies belegt die Übertragbarkeit der gemäß dem erfindungsgemäßen Verfahren ermittelten optimierten Chromatographiebedingungen auf Verfahren, bei denen Chromatographiesäulen verwendet werden.

### Beispiel 5: Screening zum Verhalten eines monoklonalen Antikörpers auf hydrophoben Interaktions-Matrizes unter verschiedenen Chromatographiebedingungen

Für dieses Beispiel wurde ein bereits in einem ersten Schritt mittels rProteinA-Affinitätschromatographie angereicherter Antikörper mAb2 verwendet. Ziel des Screenings war es, das Verhalten von mAb2 gegenüber hydrophoben Interaktions-Matrizes als Chromatographiematerialien festzustellen, um zu entscheiden, ob im weiteren Vorgehen Binde- oder Durchlaufbedingungen bezüglich des Antikörpers mAb2 untersucht werden sollen, also ein weiterer Reinigungseffekt erzielt werden kann, indem man den Antikörper an die Säule binden und Verunreinigungen bestmöglich durchlaufen lässt, oder den Antikörper durchlaufen lässt und Verunreinigungen durch deren Bindung an das Säulenmaterial abreichert.

Folgende Chromatographiematerialien wurden verwendet: Phenyl Sepharose@ HP, Phenyl Sepharose® FF, Toyopearl® Phenyl und Toyopearl® Butyl. Die eingesetzten Proteinlösungen wurden auf die in Tabelle 5.1 angegebenen Bedingungen eingestellt:

**Tabelle 5.1: Bedingungen für die Beladungspools (Testlösungen enthaltend mAb2) in Lauf 1 und 2**

| | Pool 1 | Pool 2 | Pool 3 | Pool 4 | Pool 5 | Pool 6 | Pool 7 | Pool 8 |
|---|---|---|---|---|---|---|---|---|
| pH | 6,5 | 6,5 | 6,5 | 6,5 | 6,5 | 6,5 | 6,5 | 6,5 |
| Ammoniumsulfat (AS) | 0 M | 0,1 M | 0,26 M | 0,3 M | 0,4 M | 0,6 M | 0,8 M | 1 M |
| Volumen [ml] | 2,6 | 2,6 | 2,6 | 2,6 | 2,6 | 2,6 | 2,6 | 2,6 |
| Gehalt [mg/ml) | 1,64 | 1,64 | 1,64 | 1,64 | 1,64 | 1,64 | 1,64 | 1,64 |

Es wurden 10 %-ige Suspensionen der Chromatographiematerialien in 20 %-iger Ethanol-Lösung verwendet und so ein Gelbett von 0,05 ml erzeugt. Es wurde nach dem teilweisen Satzverfahren gearbeitet. Wie in Beispiel 3 folgte nach zwei Equilibrierungsschritten die Beladung mit proteinhaltiger Testlösung (siehe Tabelle 5.1) und ein Waschschritt (mit Suspendieren des Chromatographiematerials). Eluiert wurde anschließend in drei Schritten. Die Puffer wurden wie in Tabelle 5.2 und 5.3 angegeben jeweils in zwei "Deep Well"-Platten nach dem in Beispiel 1 beschriebenen Versuchsaufbau vorgelegt. Von jeder Bedingung wurde eine dreifache Bestimmung durchgeführt. Da in der für das Screening verwendeten Proteinlösung nur wenige Verunreinigungen vorhanden waren, konnte anschließend die Produktkonzentration durch die Absorption bei 280 nm im Mikrotiterplatten-Photometer bestimmt werden.

**Tabelle 5.2: Pufferbedingungen und Anordnung auf der "Deea Well"-Platte 1**

| Equilibrierung 1 (DWP1.1 Spalte 1-4) | Equilibrierung 2 (DWP1.2 Spalte 5-8) | Waschen (DWP1.3 Spalte 9-12) | pH Wert |
|---|---|---|---|
| 50 mM Tris 0 M AS | 50 mM Tris 0 M AS | 50 mM Tris 0 M AS | pH 6,5 |
| 50 mM Tris, 0,1 M AS | 50 mM Tris, 0,1 M AS | 50 mM Tris, 0,1 M AS | |
| 50 mM Tris, 0,2 M AS | 50 mM Tris, 0,2 M AS | 50 mM Tris, 0,2 M AS | |
| 50 mM Tris, 0,3 M AS | 50 mM Tris, 0,3 M AS | 50 mM Tris, 0,3 M AS | |
| 50 mM Tris 0,4 M AS | 50 mM Tris 0,4 M AS | 50 mM Tris 0,4 M AS | |
| 50 mM Tris, 0,6 M AS | 50 mM Tris, 0,6 M AS | 50 mM Tris, 0,6 M AS | |
| 50 mM Tris, 0,8 M AS | 50 mM Tris, 0,8 M AS | 50 mM Tris, 0,8 M AS | |
| 50 mM Tris, 1 M AS | 50 mM Tris, 1 M AS | 50 mM Tris, 1 M AS | |

**Tabelle 5.3: Pufferbedingungen und Anordnung auf der "Deea Well"-Platte 2**

| Elution 1 (DWP2.1 Spalte 1-4) | Elution 2 (DWP2.2 Spalte 5-8) | Elution 3 (DWP2.3 Spalte 9-12) | pH Wert |
|---|---|---|---|
| 50 mM Tris 0 M AS | 50 mM Tris 0 M AS | 50 mM Tris 0 M AS | pH 6,5 |
| 50 mM Tris, 0 M AS | 50 mM Tris, 0 M AS | 50 mM Tris, 0 M AS | |
| 50 mM Tris, 0,1 M AS | 50 mM Tris, 0 M AS | 50 mM Tris, 0 M AS | |
| 50 mM Tris, 0,2 AS | 50 mM Tris, 0,1 AS | 50 mM Tris 0 M AS | |
| 50 mM Tris 0,2 M AS | 50 mM Tris 0,1 M AS | 50 mM Tris, 0 M AS | |
| 50 mM Tris, 0,4 M AS | 50 mM Tris, 0,2 M AS | 50 mM Tris, 0 M AS | |
| 50 mM Tris, 0,6 M AS | 50 mM Tris, 0,3 M AS | 50 mM Tris, 0 M AS | |
| 50 mM Tris, 0,6 M AS | 50 mM Tris, 0,3 M AS | 50 mM Tris, 0 M AS | |

Die Produktkonzentrationen in den einzelnen Fraktionen sind in den Abbildungen Fig. 5.1. bis Fig. 5.4 dargestellt. Es wurde festgestellt, dass mAb2 lediglich bei sehr hohen Salzkonzentrationen an die hydrophobe Matrix bindet. Damit ist es im Falle von mAb2 günstiger, einen hydrophoben Interaktionschromatographie-Prozessschritt als Durchlaufchromatographieschritt auszugestalten. Die hierfür optimalen Bedingungen können durch weitere gemäß dem erfindungsgemäßen Verfahren durchgeführte Screens schnell und mit geringem Kostenaufwand ermittelt werden.

## Patentansprüche

1. Verfahren zum Auffinden geeigneter Parameter für chromatographische Verfahren zur Trennung von Biomolekülen, wobei unter Variieren einzelner Parameter Versuche mit Chromatographiematerial beinhaltend eine Schrittfolge aus Equilibrierungs-, Beladungs-, Wasch- und Elutionsschritten durchgeführt werden und aus den Ergebnissen dieser Versuche auf optimale Parameter rückgeschlossen wird, wobei das Chromatographiematerial pro Ansatz in einer Menge eingesetzt wird, dass das hiermit erhaltene Gelbett ein Volumen von zwischen 0,01 mL und 2 mL aufweist, bei dem
(a) eine Aufschlämmung eines Chromatographiematerials in eine Mehrzahl von Vertiefungen einer Multi-Well-Filterplatte gegeben wird,
(b) in den mit der Aufschlämmung versehenen Vertiefungen ein feuchtes Gelbett erzeugt wird, indem der Überstand über dem Chromatographiematerial durch Zentrifugation oder durch Anlegen eines Druckunterschieds entfernt wird,
(c) zur Equilibrierung des in den Vertiefungen befindlichen Chromatographiematerials dem feuchten Gelbett eine Equilibrierungspufferlösung zugegeben wird und das Gelbett aufgeschlämmt wird (Equilibrierungsschritt),
(d) entsprechend Schritt (b) ein feuchtes Gelbett erzeugt wird,
(e) optional die Schritte (c) und (d) mehrmals, insbesondere einmal, zweimal oder dreimal wiederholt werden,
(f) zur Beladung des Chromatographiematerials dem Gelbett eine Testlösung zugegeben wird, die mindestens ein Biomolekül enthält, und das Gelbett aufgeschlämmt wird (Beladungsschritt),
(g) entsprechend Schritt (b) ein feuchtes Gelbett erzeugt wird,
(h) zum Waschen des Chromatographiematerials dem Gelbett eine Waschlösung zugegeben wird, wobei optional das Gelbett aufgeschlämmt wird (Waschschritt),
(i) entsprechend Schritt (b) ein feuchtes Gelbett erzeugt wird,
(k) optional die Schritte (h) und (i) mehrfach, insbesondere einmal, zweimal oder dreimal wiederholt werden, wobei die verwendeten Waschlösungen dieselbe oder unterschiedliche Zusammensetzungen aufweisen können und optional das Gelbett aufgeschlämmt oder nicht aufgeschlämmt wird,
(I) zur Elution des Biomoleküls dem Gelbett eine Elutionslösung zugegeben wird ohne eine Aufschlämmung des Gelbetts zu bewirken (Elutionsschritt),
(m) entsprechend Schritt (b) ein feuchtes Gelbett erzeugt wird und hierbei das Eluat aufgefangen wird,
(n) optional die Schritte (I) und (m) mehrfach, insbesondere einmal, zweimal oder dreimal wiederholt werden, wobei die verwendeten Elutionslösungen dieselbe oder unterschiedliche Zusammensetzungen aufweisen können, und
(o) die aufgefangenen Eluate analysiert werden.

2. Verfahren nach Anspruch 1, bei dem die Equilibrierungs-, Beladungs-, Wasch-, und Elutionsschritte in mehreren parallelen Ansätzen durchgeführt werden, wobei sich die Chromatographiebedingungen mindestens in zwei der Ansätze unterscheiden und durch Vergleich der Chromatographieergebnisse der jeweiligen Ansätze auf vorteilhafte Chromatographiebedingungen rückgeschlossen wird.

3. Verfahren nach einem der Ansprüche 1 oder 2, bei dem ein oder mehrere Schritte unter Verwendung eines Pipettierroboters durchgeführt werden.

4. Verfahren nach einem der Ansprüche 1 bis 3, bei dem als Chromatographiematerial ein Material für die lonenaustausch-, die hydrophobe Interaktions-, die Affinitäts-, die Hydroxy-Apatit-, die "reversed phase"-, die "hydrophobic charge induction"- oder die "mixed mode"-Chromatographie eingesetzt wird.

5. Verfahren nach einem der Ansprüche 1 bis 4, bei dem das Aufschlämmen durch Schütteln des Chromatographiematerials bzw. der Multi-Well-Filterplatte oder durch Auf- und Abpipettieren des Chromatographiematerials erfolgt.

6. Verfahren nach einem der Ansprüche 1 bis 5, wobei das Biomolekül ein Protein, ein Proteingemisch oder ein Gemisch von "host cell"-Proteinen und einem überexprimierten Zielprotein ist.

7. Verfahren nach einem der Ansprüche 1 bis 6, wobei nach Zugabe der Equilibrierungslösung und/oder der Testlösung und/oder der Waschlösung und/oder der Elutionslösung das Chromatographiematerial mit der Equilibrierungs-, Test-, Wasch- bzw. Elutionslösung inkubiert wird.

8. Verfahren nach einem der Ansprüche 1 bis 7, bei dem die Eluate des oder der Elutionsschritte und optional zusätzlich die Durchläufe der Beladungs- und Waschschritte aufgefangen und analysiert werden.

## Claims

1. Method of finding suitable parameters for chromatographic processes for separating biomolecules, wherein tests with chromatography material comprising a sequence of equilibration, loading, washing and elution steps are carried out, with variation of individual parameters, and from the results of these tests conclusions are drawn as to optimum parameters, the chromatography material for each mixture being used in an amount such that the gel bed thus obtained has a volume of between 0.01 ml and 2 ml, wherein
(a) a suspension of a chromatography material is placed in a plurality of wells in a multi-well filter plate,
(b) a moist gel bed is produced in the wells containing the suspension, by removing the supernatant above the chromatography material by centrifugation or by the application of a pressure differential,
(c) in order to equilibrate the chromatography material contained in the wells an equilibrating buffer solution is added to the moist gel bed and the gel bed is suspended (equilibration step),
(d) a moist gel bed is produced according to step (b),
(e) optionally steps (c) and (d) are repeated several times, in particular once, twice or three times,
(f) in order to load the chromatography material a test solution containing at least one biomolecule is added to the gel bed, and the gel bed is suspended (loading step),
(g) a moist gel bed is produced according to step (b),
(h) in order to wash the chromatography material a washing solution is added to the gel bed, the gel bed optionally being suspended (washing step),
(i) a moist gel bed is produced according to step (b),
(k) optionally steps (h) and (i) are repeated several times, particularly once, twice or three times, while the washing solutions used may have the same or different compositions and optionally the gel bed is suspended or is not suspended,
(l) for eluting the biomolecule, an eluting solution is added to the gel bed without causing suspension of the gel bed (elution step),
(m) according to step (b) a moist gel bed is produced and the eluate is caught,
(n) optionally steps (I) and (m) are repeated several times, particularly once, twice or three times, while the eluant solutions used may have the same or different compositions, and
(o) the eluates collected are analysed.

2. Method according to claim 1, wherein the equilibration, loading, washing and elution steps are carried out in a number of parallel tests, wherein the chromatography conditions differ in at least two of the tests and by comparing the chromatography results of the respective experiments conclusions are drawn as to advantageous chromatography conditions.

3. Method according to one of claims 1 or 2, wherein one or more steps are carried out using a pipetting robot.

4. Method according to one of claims 1 to 3, wherein a material for ion exchange, hydrophobic interaction, affinity, hydroxyapatite, reversed phase, hydrophobic charge induction or mixed mode chromatography is used as the chromatography material.

5. Method according to one of claims 1 to 4, wherein the suspension is effected by shaking the chromatography material or the multi-well filter plate or by pipetting the chromatography material on and off.

6. Method according to one of claims 1 to 5, wherein the biomolecule is a protein, a protein mixture or a mixture of host cell proteins and an over-expressed target protein.

7. Method according to one of claims 1 to 6, wherein after the addition of the equilibrating solution and/or the test solution and/or the washing solution and/or the eluting solution the chromatography material is incubated with the equilibration, testing, washing or elution solution.

8. Method according to one of claims 1 to 7, wherein the eluates of the elution step or steps and optionally also the run-throughs from the loading and washing steps are recovered and analysed.

## Revendications

1. Procédé pour trouver des paramètres appropriés pour un procédé chromatographique pour la séparation de biomolécules, dans lequel en faisant varier des paramètres divers, des essais sont réalisés avec un matériau de chromatographie comprenant une série d'étapes parmi les étapes d'équilibrage, de charge, de lavage et d'élution et à partir des résultats de ces essais sont déduits des paramètres optimaux, dans lequel le matériau de chromatographie est utilisé par approche en une quantité telle que le lit de gel ainsi obtenu présente un volume entre 0,01 ml et 2 ml, dans le cadre duquel
(a) une suspension d'un matériau de chromatographie est ajoutée dans une multiplicité de cavités d'une plaque de filtrage à multiples puits,
(b) dans les cavités dotées de la suspension, un lit de gel humide est produit en éliminant le surnageant sur le matériau de chromatographie par centrifugation ou par application d'une pression différentielle,
(c) pour l'équilibrage du matériau de chromatographie se trouvant dans les cavités, on ajoute au lit de gel humide une solution tampon d'équilibrage et le lit de gel est mis en suspension (étape d'équilibrage),
(d) conformément à l'étape (b), un lit de gel humide est produit,
(e) éventuellement, les étapes (c) et (d) sont répétées plusieurs fois, en particulier une fois, deux fois ou trois fois,
(f) pour la charge du matériau de chromatographie, on ajoute au lit de gel une solution de test qui contient au moins une biomolécule et le lit de gel est mis en suspension (étape de charge),
(g) conformément à l'étape (b), un lit de gel humide est produit,
(h) pour le lavage du matériau de chromatographie, on ajoute au lit de gel une solution de lavage, le lit de gel étant éventuellement mis en suspension (étape de lavage),
(i) conformément à l'étape (b), un lit de gel humide est produit,
(k) éventuellement, les étapes (h) et (i) sont répétées plusieurs fois, en particulier une fois, deux fois ou trois fois, les solutions de lavage utilisées pouvant présenter les mêmes compositions ou des compositions différentes et le lit de gel étant éventuellement mis en suspension ou non,
(l) pour l'élution de la biomolécule, on ajoute au lit de gel une solution d'élution sans entraîner une mise en suspension du lit de gel (étape d'élution),
(m) conformément à l'étape (b), un lit de gel humide est produit et l'éluat est ainsi capté,
(n) éventuellement les étapes (1) et (m) sont répétées plusieurs fois, en particulier, une fois, deux fois ou trois fois, les solutions d'élution utilisées pouvant présenter les mêmes compositions ou des compositions différentes, et
(o) les éluats captés sont analysés.

2. Procédé selon la revendication 1, dans lequel les étapes d'équilibrage, de charge, de lavage et d'élution sont réalisées en plusieurs approches parallèles, dans lequel les conditions de chromatographie se distinguent au moins dans deux des approches et dans lequel, par comparaison des résultats de chromatographie des approches respectives, on en déduit des conditions de chromatographie avantageuses.

3. Procédé selon l'une des revendications 1 ou 2, dans le cadre duquel une ou plusieurs étapes sont réalisées en utilisant un robot de pipetage.

4. Procédé selon l'une des revendications 1 à 3, dans le cadre duquel on utilise comme matériau de chromatographie, un matériau pour la chromatographie échangeuse d'ions, un matériau pour la chromatographie par interaction hydrophobe, un matériau pour la chromatographie par affinité, un matériau pour la chromatographie sur hydroxy-apatite, un matériau pour la chromatographie en phase inverse, un matériau pour la chromatographie par induction de charge hydrophobe, ou un matériau pour la chromatographie en mode mixte.

5. Procédé selon l'une des revendications 1 à 4, dans le cadre duquel la mise en suspension s'effectue par secouage du matériau de chromatographie par exemple de la plaque de filtrage à puits multiples ou par pipetage de haut en bas du matériau de chromatographie.

6. Procédé selon l'une des revendications 1 à 5, dans lequel la biomolécule est une protéine, un mélange de protéines ou un mélange de protéines de cellules hôtes et d'une protéine cible surexprimée.

7. Procédé selon l'une des revendications 1 à 6, dans lequel, après addition de la solution d'équilibrage et/ou de la solution de test et/ou de la solution de lavage et/ou de la solution d'élution, le matériau de chromatographie est incubé avec la solution d'équilibrage, de test, de lavage ou d'élution.

8. Procédé selon l'une des revendications 1 à 7, dans le cadre duquel les éluats de l'étape ou des étapes d'élution et éventuellement en outre les passages des étapes de charge et de lavage sont captés et analysés.
